Europäisches Patentamt

European Patent Office

Office européen des brevets

(19)

(11) Publication number: **0 252 619**
A1

(12) # EUROPEAN PATENT APPLICATION

(21) Application number: 87305223.7

(22) Date of filing: 12.06.87

(51) Int. Cl.⁴: **B67D 3/02** , G01F 11/32

(30) Priority: 12.06.86 GB 8614353

(43) Date of publication of application:
13.01.88 Bulletin 88/02

(84) Designated Contracting States:
BE CH DE FR GB LI LU NL

(71) Applicant: Drinkbrook Enterprises Limited
40 Stone Road
Bromley Kent BR2 9AU(GB)

(72) Inventor: Smith, Peter Southcot
40 Stone Road,
Bromley Kent(GB)
Inventor: Powell, Anthony
"Mar-e-sol",
Northdown Road, Bideford, Devon(GB)

(74) Representative: Frost, Dennis Thomas et al
WITHERS & ROGERS 4 Dyer's Buildings
Holborn
London, EC1N 2JT(GB)

(54) Liquid dispensing apparatus.

(57) A liquid measuring and dispensing device for application to the neck of a bottle (4) has an air admission valve (8) which does not open automatically when the dispensing spindle (2) is raised, and can only be opened when electric current is supplied to an operating circuit within a housing (15) carried by the supporting bracket (16) to energise a valve-operating solenoid (14) whenever a shutter (23) is raised by the spindle (2) to permit the passage of light through a light guide (20, 21) from a light source (18) to a light-sensitive device (19).

EP 0 252 619 A1

## LIQUID DISPENSING APPARATUS

This invention relates to apparatus for dispensing liquids and is particularly concerned with beverage-dispensing apparatus of the kind comprising a dispensing chamber for application to the mouth of a bottle and a mounting bracket for securing the bottle in inverted position on a bar or like installation.

Apparatus of this kind, usually employed for dispensing measured quantities of an alcoholic beverage, is well-known and is amply described in, for example, U.K. patents 455266 and 532530.

A principal object of the present invention is to provide simple and positive means for preventing unauthorised use of such apparatus.

Another object of the invention is to provide means for preventing the unauthorised removal of a bottle fitted with the dispenser, from the mounting bracket, and a further object of the invention is to provide means which operates, each time a proper quantity of liquid has been dispensed, to transmit a signal which can be monitored by management and, if required, can be made to activate a stock control or sales monitoring device such as a cash-till or computer.

In accordance, therefore, with a principal feature of the invention, a valve for admitting air to the dispensing chamber in order to permit dispensing to take place, is only opened when a shutter, operated in response to upward pressure on the operating arm of the dispenser, permits a beam of light from a light source in the mounting bracket to fall upon a light-sensitive device also mounted in the bracket.

An embodiment of the invention will be described, by way of example, with reference to the accompanying drawings in which:

Figure 1 shows, in part sectional elevation, a device for dispensing measured quantities of liquid, applied to the neck of an inverted bottle and separated from a mounting bracket;

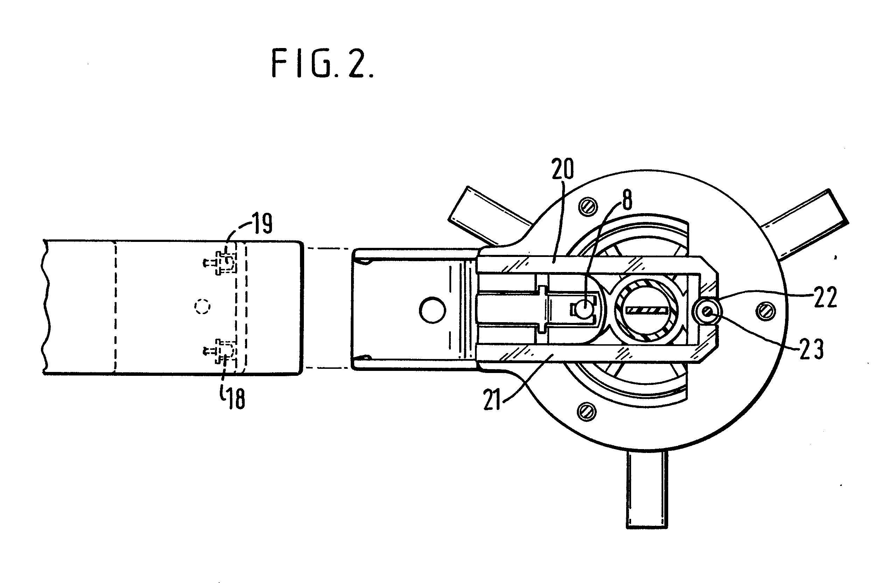

Figure 2 shows a horizontal section through the dispenser and bracket of Fig. 1; and

Figure 3 is a diagram of a suitable electrical operating circuit for the dispenser shown in Figs. 1 and 2.

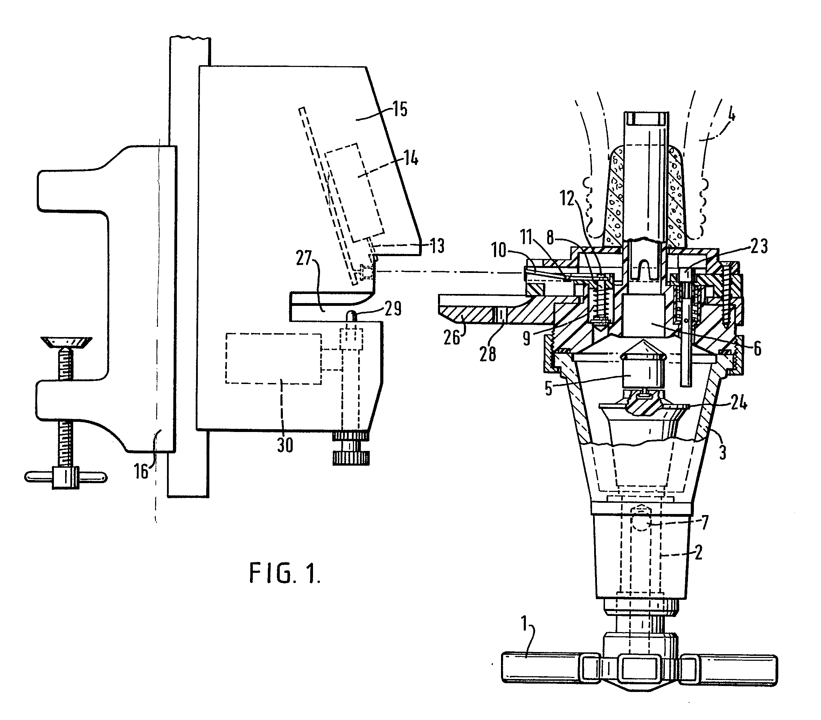

The dispenser illustrated in the drawings operates in a similar manner to that of conventional dispensers to the extent that upward pressure applied, through a glass to be filled, to an operating arm 1 moves a central spindle 2 upwards against spring action, from the position shown in Fig. 1 in which the transparent measuring chamber 3 communicates with the interior of the inverted bottle 4 and is closed off from the hollow discharge end of the spindle, to an upper position (not shown) in which a valve member 5 universally jointed to the upper end of the spindle closes the inlet port 6 at the upper end of the chamber and the lower end of the chamber is connected to discharge through a port 7 in the hollow portion of the spindle.

The chamber 3, however, will not empty through the discharge end of the spindle 2 until a valve 8, biassed into closed position by a spring 9, is opened to admit air to the chamber. Opening of the valve 8 has usually been effected automatically in response to upward movement of the spindle 2 by a rod or the like movable with the spindle, but in order to prevent unauthorised dispensing of the contents of the bottle 4 the present invention provides means, independent of the spindle, for opening the valve.

As shown in Fig. 1, one end of a lever 10, pivoted at 11 on the upper end of the dispenser, engages beneath a shoulder 12 on the stem of the valve 8, while the other end of the lever is located in the path of the plunger 13 of a solenoid 14 in a housing 15 carried by the usual mounting bracket 16.

The solenoid 14 can be energised to operate the plunger 13 by an electrical signal transmitted through an amplifier 17 by a photo-cell 18 in the housing 15 each time the photo-cell is exposed to infra-red light from a light-emitting diode 19 also mounted in the housing opposite one branch 20 of a light guide arranged in the upper portion of the dispenser with its other branch 21 opening opposite the photo-cell 18. The ends of the branches 20, 21 remote from the photo-cell and light source face each other across a gap 22 into which extends a shutter 23 which normally prevents the passage of light across the gap and is movable in an upward direction by engagement with a flange 24 on the spindle 2 whenever the latter is moved upward in response to upward pressure on the operating arm 1.

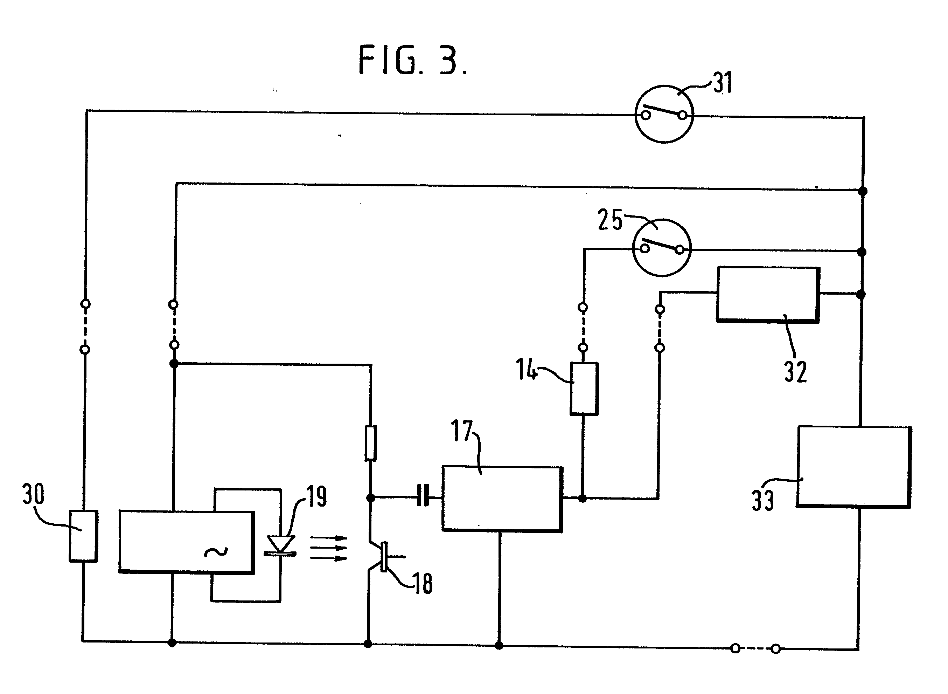

The shutter 23 is provided, adjacent its upper end, with either a portion of reduced width of a window which, on upward movement of the shutter, permits light to pass across the gap 22 from branch 20 to branch 21 of the light guide and thence to the photo-cell 18 to initiate opening of the valve 8. The supply of electrical power to the photo-cell 18 and solenoid 14 is controlled by a key-operated switch 25 which in the open position shown in Fig. 3, renders the dispenser inoperative. The dispenser is provided with a head plate 26 which is inserted in a slot 27 formed in the housing 15 and is provided with an aperture 28 to receive a locking pin 29 which snaps into the aperture 28 upon insertion of the head plate and can only be withdrawn by energisation of a solenoid 30 in the housing 15, in response to closure of a second key-operated switch 31.

The photo-cell 18 may also be used to initiate operation of a counter 32 electrically connected thereto in parallel with the solenoid 14, each time a measured quantity of liquid is dispensed from the chamber 3.

In operation, with the dispenser applied to the neck of a bottle 4 and locked in position on the bracket 16 by insertion of the head-plate in the slot 27, upward pressure applied with a glass to the operating arm 1 causes the centre spindle 2 to move upwards until the port 7 is in communication with the interior of the measuring chamber 3 and the inlet port 6 to the chamber is closed by the valve member 5. At the same time the flange 24 on the spindle 2 lifts the shutter 23 until its reduced portion or window permits a beam of infra-red light to pass through the light guide from the light source 19 to the photo-cell 18. No liquid will be dispensed from the chamber 3 however because the valve 8 cannot be opend until power is supplied to the operating circuit.

Following closure of the switch 25, therefore, light from the source 19 falling on the photo-cell 18 will initiate energisation of the solenoid 14 which operates through its plunger 13 to move the lever in an anti-clockwise direction as viewed in Fig. 1, whereby the valve 8 is lifted to its open position to enable the measuring chamber 3 to empty. Pressure is then removed from the operating arm 1 to permit the spindle 2 and shutter 23 to return to their initial positions in which the shutter once again interrupts the passage of light through the light guide causing deenergisation of the solenoid 14 and closure of the valve 8. The chamber 3 is then replenished from the bottle 4 ready for the next dispensing operation, each dispensing operation being suitably recorded by the counter 32.

When the bottle 4 is empty, the switch 25 is opened and the switch 31 is closed to energise the solenoid 30 and withdraw the locking pin 29 from the aperture 28 in the head-plate 26. The dispenser and bottle can then be removed from the bracket, the switch 31 opened and the bottle replaced by a full one before being returned to the bracket.

A particular but not essential, feature of the invention is that the electronics is confined to the holding bracket thus leaving the dispensing measure free of sensitive electronic parts and at the same time enabling the dispensing measure to be handled and washed in the same way as a conventional dispensing measure.

The invention equally applies to dispensing valves that do not incorporate a measuring feature. Such devices are sometimes used in relation to wine dispensing but are not exclusively confined to that beverage.

As an alternative to the manual switching of the supply current the switching could be controlled by a time switch thus making the securing function automatic in its action

The light guides may be extended to enable the electronics to be sited remotely and centrally, say in the control office.

In an alternative embodiment the shutter may be mounted in the fixed housing 15 on the bottle bracket 16 and the movement of the centre spindle 2 transmitted to the shutter by a lever mechanism extending from the headplate 26 into the housing 15.

Electrical power to the operating circuit is preferably supplied through a power-pack 33.

The diameter of valve member 5 is preferably the same as the diameter of that portion of the spindle 2 provided with the port 7 in order to avoid any drips.

The switches 25 and 31 may be combined to provide a single switch for controlling both dispensing and locking of the dispenser.

## Claims

1. Liquid dispensing apparatus of the kind comprising a dispensing chamber (3) for application to the neck of a bottle (4) and having an inlet (6) and an outlet for the entry and discharge of liquid, an externally actuated dispensing member (2) axially movable within said chamber between a first position in which said inlet is open and said outlet is closed, and a second position in which said inlet is closed and said outlet is open, a valve (8) operable to admit air to the chamber when said dispensing member is in its second position and means (15, 16) for supporting an upturned bottle with the dispensing chamber thereon, characterised in that opening of said air admission valve (8) in response to movement of said dispensing member (2) to its second position is only effected when electric current is supplied to an operating circuit in said supporting means (15, 16), said circuit including a valve actuator (13, 14) operable in response to a signal from a light-sensitive device (18) each time a shutter (23) movable with said dispensing member, exposes said light-sensitive device to a source (19) of activating light.

2. Apparatus according to claim 1, wherein said valve actuator (13, 14) is a solenoid electrically connected to the output of said light-sensitive device (18) and acting on one end of a pivotal lever (10) having its other end in operative engagement with said air admission valve (8).

3. Apparatus according to claim 1 or 2, wherein said valve actuator (13, 14) and light-sensitive device (18) are connected to a source of electrical power (33) through a switch (25) which can only be operated by a key or other form of security device exclusive to an authorised person.

4. Apparatus according to any one of claims 1 to 3, wherein said light-sensitive device (18) and said light source (19) are positioned in said supporting means (15, 16) at opposite ends of a light-guide (20, 21) controlled by said shutter (23).

5. Apparatus according to claim 4, wherein said light-guide (20, 21) is formed in the upper end of said dispenser above said chamber (3) and said shutter (23) is energised by an abutment (24) on said dispensing member (2).

6. Apparatus according to claim 4, wherein said light guide (20, 21) and said shutter (23) are provided in said supporting means (15, 16) and movement of said dispensing means (2) is transmitted to said shutter by lever mechanism.

7. Apparatus according to any preceding claim, wherein said shutter (23) is formed with a portion of reduced width or a window which in the second position of the dispensing member (2) permits light to pass from the light source (19) to the light-sensitive device (18).

8. Apparatus according to claim 1, wherein said support means (15, 16) is a bracket which houses said electrical circuit and is provided with means to receive and securely hold said bottle (4) and dispenser.

9. Apparatus according to claim 8, wherein said bracket (15, 16) is provided with a slot (27) to receive an apertured head plate (26) on said dispenser and a locking pin (29) which enters the aperture (28) in the head plate on insertion of the latter in the slot and can only be removed therefrom on energisation of a solenoid (30).

10. Apparatus according to claim 9, wherein said solenoid (30) is connected to a source of electrical power (33) by a switch (31) which can only be operated by a key or other form of security device exclusive to an authorised person.

11. Apparatus according to claim 10, as appended to claim 3, wherein said switches (25, 31) are combined to provide a single switch for controlling both dispensing by and locking of, the dispenser.

12. Apparatus according to any preceding claim, wherein the output of said light-sensitive device (18) is electrically connected either to a counter (32) for recording each dispensing operation or to some other form of electronic data collecting apparatus.

13. Apparatus according to any preceding claim for dispensing measured quantities of liquid, wherein said dispensing chamber (3) is also a measuring chamber.

FIG. 1.

0 252 619

# FIG. 2.

0 252 619

# FIG. 3.

0 252 619

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 032 831 (SANDIACRE ELECTRICS LTD.) * Figure 1; page 4, line 13 - page 6, line 26 * | 1 | B 67 D 3/02 G 01 F 11/32 |
| | --- | | |
| A | GB-A-2 080 250 (FABDEC LTD.) | | |
| | ----- | | |

TECHNICAL FIELDS SEARCHED (Int. Cl.4)

B 67 D
G 01 F

The present search report has been drawn up for all claims

| Place of search | Date of completion of the search | Examiner |
|---|---|---|
| THE HAGUE | 27-10-1987 | DEUTSCH J.P.M. |